# EUROPEAN PATENT APPLICATION

(11) **EP 4 410 144 A1**
(43) Date of publication of application: **07.08.2024**
(21) Application number: 23154989.0
(22) Date of filing: 03.02.2023
(51) Int. Cl.: A44C 27/00, A44B 11/00, A44C 11/00, F16G 11/08

(54) **MACHINES AND METHODS FOR MANUFACTURE OF PIECES OF JEWELRY**

(71) Applicant: Pandora Production Co., Ltd., Bangkok 10250 (TH)
(72) Inventor: PACHANON, Rungrueang, 10540 Samutprakarn (TH); PACHANON, Prompong, 10260 Krung Thep Maha Nakhon (TH); MUANGSAN, Paisan, 10560 Samut Prakan (TH); PHADUNGNANONT, Namchok, 30120 Nakhon Ratchasima (TH); PHAKADANG, Arthit, 33120 Si Sa Ket (TH); SEENGAM, Wichai, 39180 Nong Bua Lam Phu (TH); UDOMPOL, Suchin, 31110 Buriram (TH)
(74) Representative: AWA Denmark A/S

(57) **Abstract**

A machine for automated manufacture of pieces of jewelry, especially jewelry chains, wherein each said piece of jewelry comprises an elongated member having a first end, said machine comprising:
a cutting machinery part configured to automatically cut the elongated member of each said piece of jewelry from an endless elongated member,
a crimping machinery part configured to automatically crimp an end of each cut elongated member and/or to crimp a spacer part onto each cut elongated member at a desired position of said elongated member,
a chamfering machinery part configured to reshape an outer surface of an end cap, and
an induction soldering machinery part configured to automatically induction solder said end cap to each cut elongated member.

## Description

### Technical field

The present disclosure relates to machines and methods for automated manufacture of pieces of jewelry, especially jewelry chains, potentially flexible jewelry chains.

### Background art

Jewelry, such as bracelets and necklaces, traditionally comprises one or more elongated members which are used to hold ornamental components onto them, e.g. beads or charms. An elongated member may be a chain, wire, string, thread, chord, or the like.

The crafting process of jewelry typically encompasses a front end process and a finishing process. During the front end process, the rubber is usually moulded, wax injected and mixed, followed by burn-out. Subsequently, the casting is made followed by a cleaning process and a cutting process.

Afterwards, the finishing process is employed where the item is grinded, polished, assembled and tumbled. The next step is the soldering process followed by a stone setting, enamel coating and electro plating.

The above crafting process involves several steps, many of which require manual operation. Manual crafting is normally accomplished by hand wherein a skilled operator will be involved in the whole process. The manual assembly and finishing process of a large volume of pieces of jewelry requires a lot of manpower and is associated with long production times, high electricity consumption and thus, increased CO2 emissions.

Traditional cutting of elongated members such as chains includes the arranging of the chain on the cutting board, manual checking the dimensions of the chain and manual cutting to the desired length followed by manual inspection.

Traditional finishing process of an end portion of the chain typically includes grinding it by hand and reshaping it to the desired finish by hand.

In case external elements should be crimped on the chain, the chain should be straightly arranged by hand, marked at the desired crimping position, crimped and then inspected by hand.

In the case of manual soldering, the operator will have to fix the position of the item and apply a relatively wide, high temperature flame to the spaced joint to be connected. Therefore, such method requires skilled operators and even then, care must be particularly taken so that adjacent areas of the jewelry articles, such as a chain body, an ornament or spring ring thereof, will not be contacted by the flame for an undue length of time, to cause either annealing or discoloration thereof.

In addition to the skill required for such manual procedures, hand operations have the inherent drawback of being of relatively slow speed, difficult to control and having variable, non-uniform results with regards to quality of the end products.

Examples of a jewelry chain are disclosed in US 7,007,507 B2 or in WO 2021197656 A1.

### Summary

It may, therefore, be an objective of the inventive concepts of the present disclosure to provide an automated machine and method for expediting the time required for the finishing process of a piece of jewelry, increasing the accuracy of the final product and safety of the manufacturing process.

A further object of the inventive concepts of the present disclosure may be to provide a machine and method that lead to significant energy savings and/or increase the productivity of the manufacturing process and/or reduce the amount of faulty pieces of jewelry produced.

A still further object of the present concept may be the provision of a piece of jewelry produced by a manufacturing process, in which a plurality of jewelry articles can be sequentially soldered, chamfered and crimped.

One or more of these and further objects may be met by the machines and methods disclosed herein.

A machine for automated manufacture of pieces of jewelry is hereby disclosed, especially jewelry chains, wherein each said piece of jewelry comprises an elongated member having a first end, said machine comprising: a cutting machinery part configured to automatically cut the elongated member of each said piece of jewelry from an endless elongated member, a crimping machinery part configured to automatically crimp an end of each cut elongated member and/or to crimp a spacer part onto each cut elongated member at a desired position of said elongated member, a chamfering machinery part configured to reshape an outer surface of an end cap, and an induction soldering machinery part configured to automatically induction solder said end cap to each cut elongated member.

In this context, the machine comprises several different machinery parts, hence it may also be perceived as a system.

The machine may further comprise a control unit configured to receive user settings and operate a controlling device, so that the controlling device is adapted to control the machinery parts, the machinery parts being thus automated according to the signals from the user settings.

In an embodiment, the time for processing a piece of jewelry in any of the induction soldering machinery part, chamfering machinery part, crimping machinery part and chain cutting machinery part is less than 11 seconds. That may be understood as the cycle time of each machinery parts being less than 11 seconds. The cycle time is the time needed to complete the process of cutting, crimping, induction soldering and/or chamfering for one piece of jewelry in any one of the respective machinery parts.

In an embodiment, the machine further comprises a first feeder configured to automatically feed said endless elongated member to the cutting machinery part, wherein the cutting machinery part comprises an automated gripper configured and shaped to engage a free end of said elongated member so as to hold a portion of said endless elongated member. The cutting machinery part comprises a cutting tool adapted and shaped to automatically carry out said cutting of the elongated member of each said piece of jewelry from said endless elongated member. The first feeder and/or the cutting tool are automated according to a predefined setting, such as length of the elongated member of each said piece of jewelry. The machine further comprises a second feeder configured to automatically feed the cut elongated members to said crimping machinery part and, potentially, a third feeder configured to automatically feed the spacer part to said crimping machinery part. The crimping machinery part comprises a crimping tool adapted and shaped to automatically perform said crimping of said elongated member or spacer part. The second feeder, the crimping tool and, potentially, the third feeder, are automated according to a predefined setting, such as a desired position of the crimped spacer part onto the elongated member. The machine comprises a fourth feeder configured to automatically feed the crimped elongated members to said induction soldering machine part. The machine further comprises a fifth feeder configured to automatically feed the end cap and/or a soldering rod to the induction soldering machinery part. The induction soldering machinery part comprises a soldering module adapted and shaped to automatically perform said induction soldering. The induction soldering machinery part comprises a detection module for automatic testing of the tensile strength of the soldered part of the elongated member and optionally, a load-out tray. The fifth feeder, the soldering module and the operation of the load-out tray are automated according to a predefined setting. The machine comprises a sixth feeder configured to feed the elongated members and/or the end caps to the chamfering machinery part. The chamfering machinery part comprises a chamfer cutting tool and, optionally, a load-out tray, the chamfer cutting tool being adapted and shaped to chamfer a surface of the injection soldered elongated members. The feeder, the chamfer cutting tool and, optionally, the load-out tray are automated according to a predefined setting, and the machine further comprises a detection module for automated quality check of the piece of jewelry and/or the end cap.

In this context, "automatic" and "automated" are used to refer to processes or operations that do not require a user to perform the process as opposed to "manual" processes. The two terms "automatic" and "automated" may be used interchangeably.

An embodiment defining that everywhere terms such as automated or automatic are used, the machinery may be "fully" automated, i.e. does not require any manual steps.

The elongated member may be or comprise a chain, such as a snake chain, wire, string, thread, chord, or the like. The elongated member may be a snake chain. The snake chain may comprise round, wavy, and/or smooth metal links that are joined to form a flexible chain. The flexible chain may refer to the presence of a plurality of links and/or joints on the chain enabling the relative movement of a link compared to another link on the chain.

The elongated member and/or the piece of jewelry may comprise or consist of metal, such as silver, iron, gold, brass, or a metal alloy, potentially including one or more of these, such as steel or a silver alloy, a plastic or plastic polymer material, glass, precious stone or gemstone, wood, or any other suitable material. The piece of jewelry may be coated or plated, such as goldplated. The elongated member may also be coated or plated, such as goldplated. The terms 'elongated member', 'chain' and 'piece of jewelry' may be used interchangeably describing the steps of the manufacturing process.

The elongated member, in particular an intermediate part thereof, may be flexible and/or elastic and/or resilient. The elongated member may be cylindrical and/or rigid and/or hollow. The elongated member may be flat and/or may be a strap-shaped member. The elongated member may include or consist of interconnected or hinged joints, potentially chain joints. The elongated member has a first end and a second end.

The end cap may be a shaft or a cap that is adapted to be positioned adjacent to an intermediate, flexible part of the elongated member. The cap may cover an end of the latter. A first end of the elongated member may be or comprise a tip part, potentially forming part of the cap. Alternatively, the first end or cap may be fixed to or may be integral or in one piece with and/or may extend in continuation of an intermediate, flexible part of the elongated member and/or of a length direction of the elongated member. The first end or cap or, in particular, the tip part may have a conical, annular, spherical, cylindrical and/or parallelepipedal shape, which may be configured to fit into an opening of a jewelry clasp. The first end or tip part may have a truncated conical or frustoconical shape. The first end may be of or comprise a magnetically attractable material or may be or comprise a magnet.

The elongated member of the piece of jewelry may further be connected with the jewelry clasp.

A first end of an intermediate portion, such as a chain, of the elongate member may be attached to and/or positioned in the cap part. The elongated member may have a second end, which in a piece of jewelry comprising the jewelry clasp and the elongated member may be positioned adjacent to the first end of the elongated member when the first end is inserted into the jewelry clasp in an assembled condition.

Alternatively, the elongated member may be endless meaning that it has a first end and an indefinite length.

The piece of jewelry may comprise spacer parts and/or clips mounted on at least one point on the chain.

The clips may be threaded or unthreaded keepers configured and arranged for selective placement around the elongated member. The clip may have complimentary dimensions to the cross-section of the elongated member such that it is retained in position at the elongated member by abutment when installed on the elongated member. The clip may have a spherical, cylindrical, rounded or flat shape. It may comprise silver, stainless steel, copper, copper, bronze, gold or plastic.

In another embodiment, the cutting, crimping, soldering and/or chamfering machinery part comprises a control unit with a user interface adapted to receive the automated predefined settings or signals and to operate a device adapted to control the cutting, crimping, soldering and/or chamfering tool. The user interface may comprise a computer screen, touch screen, push button, lever and/or keyboard.

Each of the above-mentioned manufacturing steps may be performed in a separate machinery part. Alternatively, a combined machinery part performing two or more of the above steps may be realized; for example, cutting and crimping may be performed in one machinery.

The cutting, crimping, soldering and/or chamfering machinery parts may be disposed adjacent to each other, such that the end product (piece of jewelry) of one manufacturing step from one machine is automatically loaded onto the next machine for the subsequent manufacturing step.

Alternatively, in the induction soldering machinery part, the elongated members may be loaded in from the crimping machinery while the end caps may be loaded in from the chamfering machinery. The final piece of jewelry may therefore be loaded out from the induction soldering machinery.

The cutting, crimping, soldering and/or chamfering machinery parts may further comprise a sensor for automatically sensing irregularities of the piece of jewelry and/or components, its dimensions, size etc. The sensors may be connected with a controlling device, said controlling device adapted to engage and/or operate based on specified signals from the sensors. A processing unit may further be comprised in one or more of the machinery parts.

According to a second object of the disclosure, a method for automated manufacture of pieces of jewelry is provided, such as flexible jewelry chains, each said piece of jewelry comprising an endless elongated member having a first end, the method comprising the steps of:
a) cutting the elongated member at a desired length,
b) crimping the first end and/or the second end of the elongated member and/or crimping a spacer part onto the elongated member at a desired position of the elongated member,
c) chamfering an outer surface of an end cap, and/or
d) induction soldering of the end of the elongated member to the end cap or induction soldering of the spacer part to the end cap,
wherein any one or more of the steps a), b), c) and d) are automated.

In an embodiment, all method steps a-d are automated and the time for processing a piece of jewelry in any of the above method steps is less than 11 seconds.

In an alternative embodiment, step d) may precede step c) such that the chamfering of the outer surface of the end cap is performed after the induction soldering of the end of the elongated member or of the spacer part to the end cap.

Step a) may comprise a step of feeding the piece of jewelry to a cutting tool via a first feeder, gripping the first end of the elongated member and wherein the feeding, gripping and cutting of the endless elongated member is automated according to a predefined setting.

In an embodiment of the manufacturing process, the elongated member is loaded, gripped and cut at a desired length. The elongated member preferably at its first end is gripped by a gripper, said gripper being adapted and shaped to engage the elongated member so as to hold a portion of said elongated member. Subsequently, the elongated member is cut at a desired length and/or position by a cutting tool. The desired length or position may be inserted as a signal or setting into the machine by a user. The gripping and cutting of the elongated member is fully automated. The cut piece of jewelry may subsequently be loaded onto the next manufacturing step.

The result of the automated cutting is a uniform and accurate cut of the elongated member, decrease of faulty items, errors and accidents, as well as reduced production times.

Step b) may comprise the feeding of the piece of jewelry and/or spacer part into a crimping tool via a feeder, and wherein the loading and crimping of the piece of jewelry is automated according to a predefined setting.

In an embodiment of the manufacturing process, the elongated member is loaded into the machine by a feeder, wherein an end of the elongated member is crimped by a crimping tool. Optionally, a spacer part is also loaded into the machine by another feeder and subsequently crimped onto a desired position onto the elongated member by the crimping tool. The loading and/or crimping of the elongated member and/or spacer is fully automated according to a predefined setting or signal received by a control unit and set by a user.

Step b) may further comprise the testing of the tensile strength of the crimped jewelry via a detection module.

The result of the automated crimping is the reduction of faulty items or errors, hence the increased tensile strength of the elongated member and its attachments, such as spacers, as well as the reduced production time.

Step d) may comprise the feeding of the end cap and/or a soldering rod to a soldering module, and wherein the feeding and induction soldering of the piece of jewelry is automated according to a predefined setting.

Induction soldering relates to the introduction of electromagnetic fields into metallic bodies in order to heat joints between components and melting an alloy with a lower melting temperature than the component parts. Induction soldering results in a higher-quality, air, and watertight joints with less oxidation and cleaning requirements than joints made with flame heating technology.

In an embodiment of the manufacturing process, the end cap and a soldering rod are loaded into a machine. The end cap and the soldering rod may be loaded into the machine by two different feeders. The soldering rod is inserted into the end cap. The elongated member is subsequently loaded into the machine and an end portion of the elongated member is soldered to the end cap. The soldering is performed using induction soldering and is fully automated according to a predefined value set in the machine. The predefined value may be a parameter about the desired result, duration of the process, size of the soldered part etc. After the soldering process is finished, the soldered part is tested by a detection module for its tensile strength. The soldered piece of jewelry may subsequently be loaded out of the machine via a load-out tray.

Step d) may further comprise the testing of the tensile strength of the soldered part of the elongated member to the end cap via a detection module.

Step c) may comprise the loading of the piece of jewelry and/or end cap and optionally the loading out of the piece of jewelry, and wherein the loading, the chamfering and optionally the loading out of the piece of jewelry are automated according to a predefined setting.

In an embodiment of the manufacturing process, the piece of jewelry and/or an end cap is loaded by a feeder, chamfered at an end by a chamfer cutting tool and subsequently loaded onto step d).

Alternatively, when step c) is the final step of the manufacturing process following step d), the piece of jewelry may be loaded out by a tray when the process is completed. The loading-in, loading-out and/or chamfering process are fully automated. The chamfering step is automated according to a setting or signal received by a control unit and inserted by a user. Such setting may be the size of the surface to be chamfered, the desired inclination of the chamfered surface, the amount of steps of the chamfered surface, the smoothness of the surface etc.

The result of the automated chamfering is a symmetrically chamfered outer surface of the end cap, which may facilitate its potential secure attachment into a jewelry clasp, as well as the reduced production time.

Alternatively, the chamfering step may be replaced by grinding or reshaping of an outer surface of the end cap and/or other part of the piece of jewelry. The chamfering or reshaping step aims at polishing, reforming and finishing the outer surface of the end of the elongated member to facilitate its attachment to a lock, pendant or any other mechanism.

In an embodiment, the method further comprises the automated feeding of the piece of jewelry from one method step to the other.

In an embodiment, the cycle time of the end cap chamfering step is approx. 9 seconds. The cycle time of the crimping step is approx. 11 seconds. The cycle time of the chamfering step is approx. 1 second. The cycle time of the induction soldering step is approx. 9 seconds.

According to a third object, a piece of jewelry is provided comprising an elongated member such as a flexible chain and an end cap, the end cap being attached to an end of the elongated member, and/or wherein the end of the elongated member is soldered to the end cap via induction soldering, and/or wherein an outer surface of the end cap is symmetrically chamfered.

At least one spacer or clip may be crimped onto the elongated member.

A piece of jewelry comprising an elongated member such as a flexible chain and an end cap may be provided, wherein the end cap is attached to an end of the elongated member, said piece of jewelry is manufactured by means of the manufacturing method.

Lastly, the use of the machine according to the afore-mentioned embodiments for automated manufacture of pieces of jewelry, especially jewelry chains is disclosed.

Further embodiments and advantages of the pieces of jewelry, machines and methods according to the present disclosure are disclosed in the subsequent detailed description and in the drawings.

### Brief Description of the Drawings

In the following, an embodiment of a machine and a method according to the present disclosure will be described with reference to the enclosed drawings, in which:
Fig. 1 is a perspective view of an embodiment of a piece of jewelry manufactured with the below-mentioned method in a finished condition;
Fig. 2 is a perspective view of an embodiment of the manufacturing machine according to the present disclosure;
Fig. 3 is a perspective view of an embodiment of the cutting machinery according to the present disclosure;
Fig. 4 is a close-up view of the embodiment of the cutting machinery shown in Fig. 3;
Fig. 5 is a perspective view of an embodiment of a crimping machinery according to the present disclosure;
Fig. 6 is a perspective view of an embodiment of an induction soldering machinery according to the present disclosure;
Fig. 7 is a close-up view of the embodiment of the induction soldering machinery shown in Fig. 6; and
Fig. 8 is a perspective view of an embodiment of a chamfering machinery according to the present disclosure.

### Description of the Embodiments of the Drawings

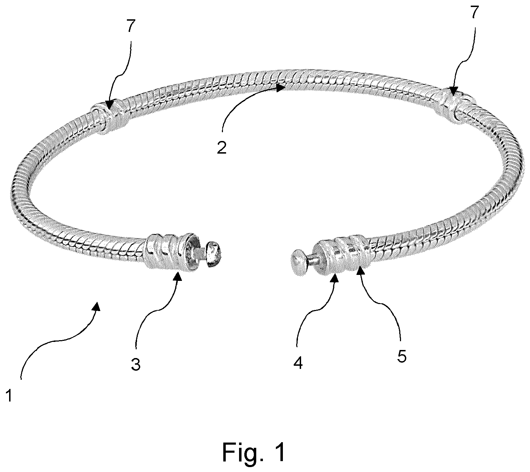

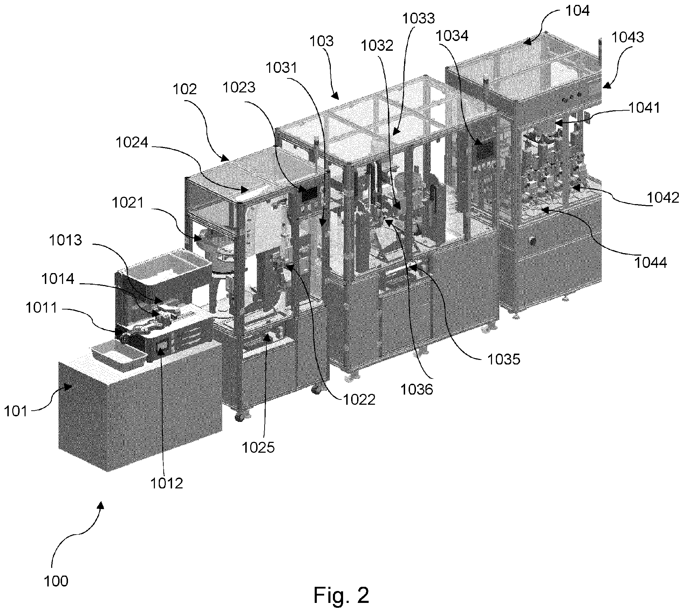

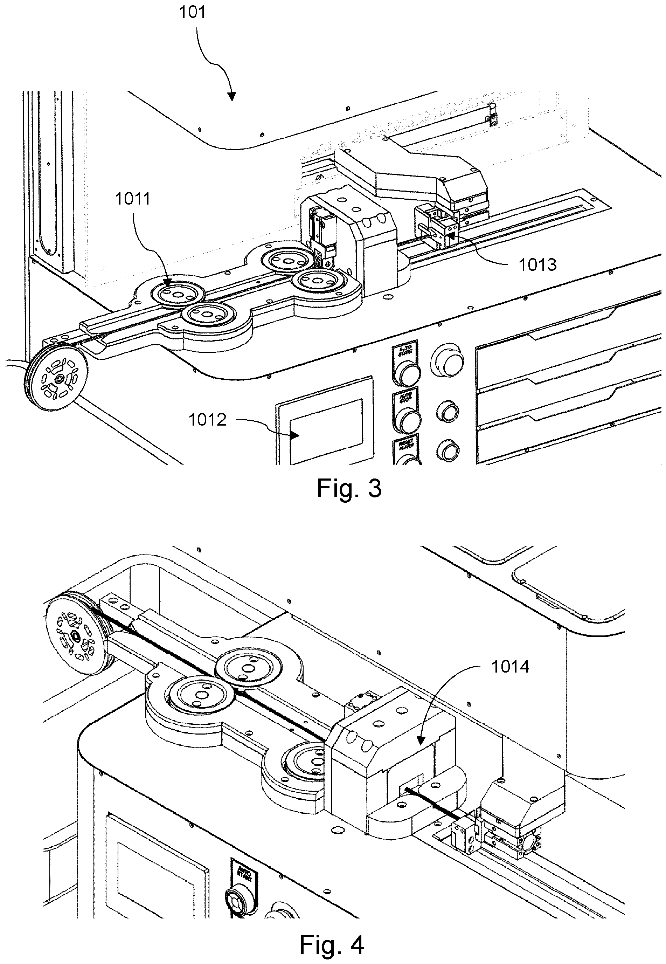

Fig. 1 shows a a piece of jewelry manufactured by the disclosed method. Fig. 2 is a perspective view of a manufacturing machine according to an embodiment of the present disclosure. Figs 3-8 show embodiments of the machinery parts comprised in the manufacturing machine.

In Fig. 1, the manufactured piece of jewelry 1 is shown. The piece of jewelry is here a flexible chain bracelet comprising an elongated member 2. Two ends 3, 4 of the elongated member 2 of the piece of jewelry 1 are shown in Fig. 2. The ends may be connected into a jewelry clasp 6 (not shown). The jewelry clasp 6 (not shown) brings the two ends 3, 4 together in a closed state and keeps the piece of jewelry 1 locked. The piece of jewelry 1 further comprises an end cap 5 attached to each of the two ends 3, 4 of the elongated member 2. The ends 3, 4 of the elongated member 2 are soldered to the end cap 5 via induction soldering. An outer surface of the end cap 5 is symmetrically chamfered. In this embodiment, two spacers 7 are crimped -at a distance from each other- onto the elongated member 2. The ends 3, 4 of the elongated member are furthermore crimped.

In Fig. 2, a machine 100 for the automated manufacture of pieces of jewelry is shown, which comprises a first feeder 1011 configured to automatically feed an endless elongated member 2 to a cutting machinery part 101. As better shown in Figs 3 and 4, the cutting machinery part 101 comprises an automated gripper 1013 configured and shaped to engage a free end of the elongated member so as to hold a portion of the endless elongated member. The cutting machinery part 101 further comprises a cutting tool 1014 adapted and shaped to automatically carry out the cutting of the elongated member of each piece of jewelry from the endless elongated member 2. The first feeder 1011 and the cutting tool 1014 are automated according to a predefined setting, such as length of the elongated member of each piece of jewelry.

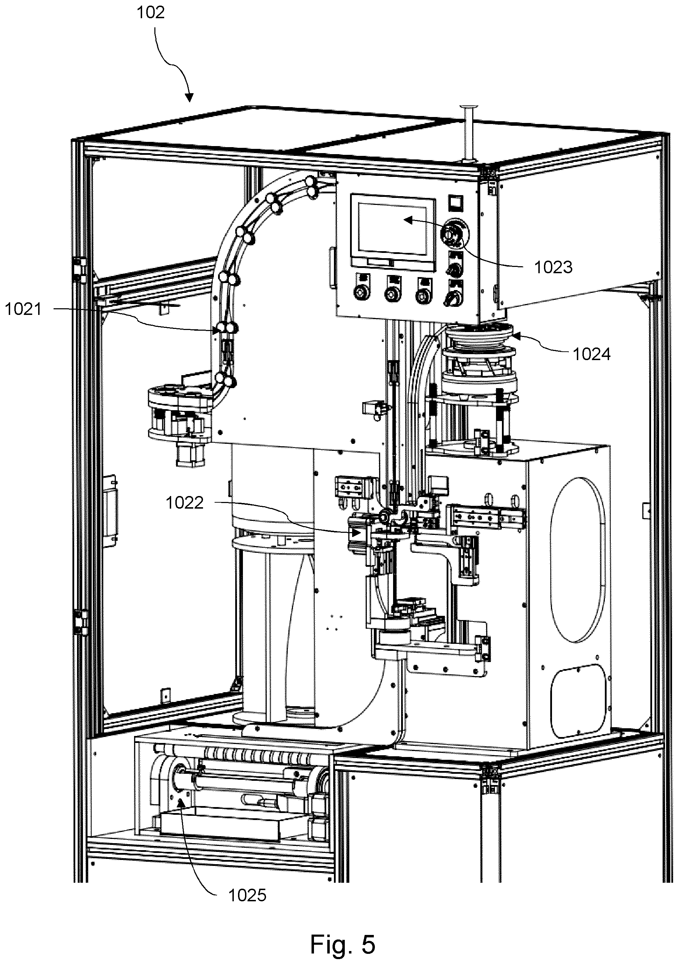

The machine 100 further comprises a second feeder 1021 configured to automatically feed the cut elongated members to a crimping machinery part 102 better shown in Fig. 5 and a third feeder 1024 configured to automatically feed the spacer part to the crimping machinery part 102. The crimping machinery part 102 is disposed adjacent to the cutting machinery 101. The crimping machinery part 102 comprises a crimping tool 1022 adapted and shaped to automatically perform the crimping of the elongated member or a spacer part. The second feeder 1021, the crimping tool 1022 and, potentially, the third feeder 1024, are automated according to a predefined setting, such as a desired position of the crimped spacer part onto the elongated member.

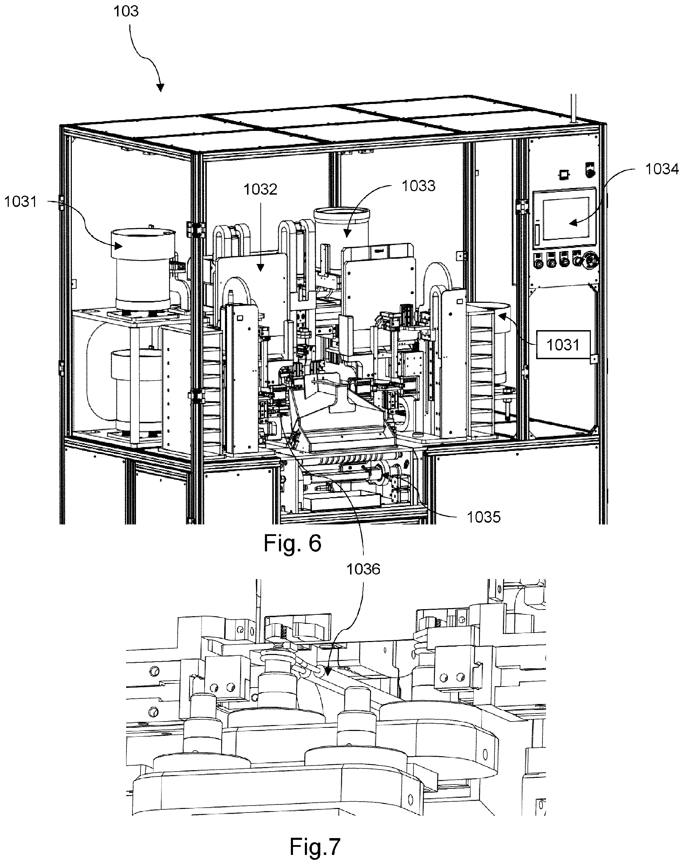

The machine 100 comprises a fourth feeder 1032 configured to automatically feed the crimped elongated members to an induction soldering machinery part 103, shown in Figs 6 and 7. The machine 100 further comprises a fifth feeder 1031 configured to automatically feed the chamfered end cap coming from the chamfering machinery 104 and/or an additional feeder 1033 to feed a soldering rod to the induction soldering machinery part 103. The induction soldering machinery part 103 comprises a soldering module 1036 adapted and shaped to automatically perform the induction soldering. The induction soldering machinery part 103 comprises a detection module 1035 for automatic testing of the tensile strength of the soldered part of the elongated member 2. The fifth feeder 1031 and the soldering module 1036 are automated according to a predefined setting. The induction soldering part 103 is disposed adjacent to the crimping machinery 102.

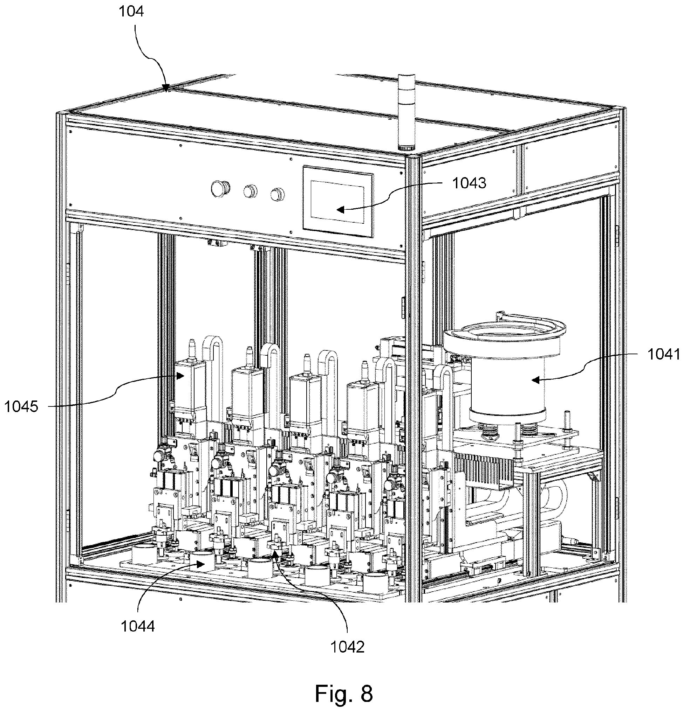

The machine 100 comprises a sixth feeder 1041 configured to feed the end caps to a chamfering machinery part 104 shown in Fig. 8. The chamfering machinery part 104 comprises a chamfer cutting tool 1042 and a load-out tray 1044, the chamfer cutting tool 1042 being adapted and shaped to chamfer a surface of the induction soldered part. The chamfering machinery 104 is adjacent to the induction soldering machinery 103. The feeder 1041, the chamfer cutting tool 1042 and the load-out tray 1044 are automated according to a predefined setting. The machine further comprises a detection module 1045 for automated safety protection for quality check of end caps. The detection module 1045 may operate in a machine protection mode, where it can support the safety tools before being broken.

Each of the machinery parts shown in Fig. 2 and Figs 3, 5, 6 and 8 comprises a control screen 1012, 1023, 1034, 1043 configured to receive user settings or signals. The control screen is connected to a control unit and is configured to operate a controlling device (not shown). The controlling device is adapted to control the machinery parts such that they are automated according to the signals from the user settings.

In this embodiment shown in Fig. 2 and Figs 3-8, the manufacturing process of a piece of jewelry, starts with the cutting step performed in the cutting machinery 101 and ends with the induction soldering step performed by the induction soldering machinery 103. The cutting machinery part 101 is configured to automatically cut the elongated member 2 of each said piece of jewelry 1 from an endless elongated member (not shown). Subsequently, the crimping machinery part 102 is configured to automatically crimp an end of each cut elongated member 2 and crimp a spacer part 7 onto each cut elongated member 2 at a desired position of the elongated member 2. The chamfering machinery part 104 is configured to reshape an outer surface of each end cap 5. Finally, the induction soldering machinery part 103 is configured to automatically induction solder the end cap 5 to each cut elongated member 2.

### List of reference signs

- 1: Piece of jewelry
- 2: Elongated member
- 3: First end
- 4: Second end
- 5: End cap
- 6: Jewelry clasp
- 7: Spacer

- 100: Machine
- 101: Cutting machinery part
- 1011: Feeder for loading of elongated member
- 1012: Control screen
- 1013: Gripper
- 1014: Cutting tool

- 102: Crimping machinery part
- 1021: Feeder for loading elongated member
- 1022: Crimping tool
- 1023: Control screen
- 1024: Feeder for loading spacer part
- 1025: Detection module

- 103: Induction soldering machinery part
- 1031: Feeder for loading of end cap
- 1032: Feeder for loading of elongated member
- 1033: Feeder for loading of silver rod
- 1034: Control screen
- 1035: Detection module
- 1036: Soldering module

- 104: Chamfering machinery part
- 1041: Feeder for loading of end cap
- 1042: Chamfering tool
- 1043: Control screen
- 1044: Tray for loading out the piece
- 1045: Detection module

## Claims

1. A machine for automated manufacture of pieces of jewelry, especially jewelry chains, wherein each said piece of jewelry comprises an elongated member having a first end, said machine comprising:
a cutting machinery part configured to automatically cut the elongated member of each said piece of jewelry from an endless elongated member,
a crimping machinery part configured to automatically crimp an end of each cut elongated member and/or to crimp a spacer part onto each cut elongated member at a desired position of said elongated member,
a chamfering machinery part configured to reshape an outer surface of an end cap, and
an induction soldering machinery part configured to automatically induction solder said end cap to each cut elongated member.

2. A machine according to claim 1, wherein the time for processing one piece of jewelry in any one or more of the induction soldering machinery part, chamfering machinery part, crimping machinery part and cutting machinery part is less than 11 seconds.

3. A machine according to claim 1 or 2,
wherein the machine further comprises a first feeder configured to automatically feed said endless elongated member to the cutting machinery part,
wherein the cutting machinery part comprises an automated gripper configured and shaped to engage a free end of said elongated member so as to hold a portion of said endless elongated member,
wherein the cutting machinery part comprises a cutting tool adapted and shaped to automatically carry out said cutting of the elongated member of each said piece of jewelry from said endless elongated member,
wherein the first feeder and/or the cutting tool are automated according to a predefined setting, such as length of the elongated member of each said piece of jewelry,
wherein the machine further comprises a second feeder configured to automatically feed the cut elongated members to said crimping machinery part and, potentially, a third feeder configured to automatically feed the spacer part to said crimping machinery part,
wherein the crimping machinery part comprises a crimping tool adapted and shaped to automatically perform said crimping of said elongated member or spacer part,
wherein the second feeder, the crimping tool and, potentially, the third feeder, are automated according to a predefined setting, such as a desired position of the crimped spacer part onto the elongated member,
wherein the machine comprises a fourth feeder configured to automatically feed the crimped elongated members to said induction soldering machine part,
wherein the machine further comprises a fifth feeder configured to automatically feed the end cap and/or a soldering rod to the induction soldering machinery part,
wherein the induction soldering machinery part comprises a soldering module adapted and shaped to automatically perform said induction soldering, and, optionally, a load-out tray,
wherein the induction soldering machinery part comprises a detection module for automatic testing of the tensile strength of the soldered part of the elongated member,
wherein the fifth feeder and the soldering module are automated according to a predefined setting,
wherein the machine comprises a sixth feeder configured to feed the elongated members and/or end caps to the chamfering machinery part,
wherein the chamfering machinery part comprises a chamfer cutting tool and, optionally, a load-out tray, the chamfer cutting tool being adapted and shaped to chamfer a surface of the elongated members and/or end caps,
wherein the feeder, the chamfer cutting tool and, optionally, the load-out tray are automated according to a predefined setting, and
wherein the machine further comprises a detection module for automated quality check of the piece of jewelry.

4. A machine according to claim 3, wherein the cutting machinery part and/or crimping machinery part and/or soldering machinery part and/or chamfering machinery part comprises a control unit with a user interface adapted to receive the automated predefined settings and/or signals and to operate a device adapted to control the cutting, crimping, soldering and/or chamfering tool.

5. A method for automated manufacture of pieces of jewelry, such as flexible jewelry chains, each said piece of jewelry comprising an endless elongated member having a first end, the method comprising the steps of:
a) cutting the elongated member at a desired length,
b) crimping the first end and/or the second end of the elongated member and/or crimping a spacer part onto the elongated member at a desired position of the elongated member,
c) chamfering an outer surface of an end cap, and/or
d) induction soldering of the end of the elongated member to the end cap or induction soldering of the spacer part to the end cap,
wherein any one or more of the steps a), b), c) and d) are carried out in a continuous, automated process.

6. A method according to claim 5, wherein all method steps a) to d) are automated, and wherein the time for processing a piece of jewelry in any of the above method steps is less than 11 seconds.

7. A method according to claim 5 or 6, wherein step a) comprises a step of feeding the piece of jewelry to a cutting tool via a first feeder, gripping the first end of the elongated member and wherein the feeding, gripping and cutting of the endless elongated member is automated according to a predefined setting.

8. A method according to any one of claims 5 to 7, wherein step b) comprises feeding of the piece of jewelry and/or spacer part into a crimping tool via a feeder, and wherein the loading and crimping of the piece of jewelry is automated according to a predefined setting.

9. A method according to any one of claims 5 to 8, wherein step d) comprises feeding of the end cap and/or a soldering rod via a feeder to a soldering module, and optionally the loading out of the piece of jewelry, and wherein the feeding, the induction soldering of the piece of jewelry and optionally the loading out of the piece of jewelry is automated according to a predefined setting.

10. A method according to claim 5, wherein step c) comprises the loading of the piece of jewelry and/or end cap via a feeder into a chamfering tool and optionally the loading out of the piece of jewelry, and wherein the loading, the chamfering and optionally the loading out of the piece of jewelry are automated according to a predefined setting.

11. A method according to claim 9, wherein step d) further comprises the testing of the tensile strength of the soldered part of the elongated member via a detection module.

12. A method according to claim 5, wherein the method further comprises the automated feeding of the piece of jewelry from one method step to the other.

13. A piece of jewelry comprising an elongated member, such as a flexible chain and an end cap,
wherein the end cap is attached to an end of the elongated member, and/or
wherein the end of the elongated member is soldered to the end cap via induction soldering, and/or
wherein an outer surface of the end cap is symmetrically chamfered.

14. A piece of jewelry manufactured by the method according to any one of claims 5 to 12.

15. Use of the machine according to any one of claims 1 to 4 for automated manufacture of pieces of jewelry, especially jewelry chains.
